(19) Europäisches Patentamt

European Patent Office

Office européen des brevets

(11) **EP 2 241 065 B1**

(12) **EUROPEAN PATENT SPECIFICATION**

(45) Date of publication and mention
of the grant of the patent:
**02.11.2016 Bulletin 2016/44**

(21) Application number: **08705387.2**

(22) Date of filing: **07.02.2008**

(51) Int Cl.:
*H04L 12/16* (2006.01)      *H04L 12/26* (2006.01)
*H04L 29/06* (2006.01)

(86) International application number:
**PCT/SE2008/050151**

(87) International publication number:
**WO 2009/099357 (13.08.2009 Gazette 2009/33)**

(54) **METHOD AND DEVICE FOR TRANSPORT DELAY ANALYSIS**

VERFAHREN UND EINRICHTUNG ZUR TRANSPORTVERZÖGERUNGSANALYSE

PROCÉDÉ ET DISPOSITIF D'ANALYSE DE TEMPS DE PROPAGATION

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**20.10.2010 Bulletin 2010/42**

(73) Proprietor: **Telefonaktiebolaget LM Ericsson
(publ)
164 83 Stockholm (SE)**

(72) Inventor: **MAHKONEN, Arto Juhani
FI-00950 Helsinki (FI)**

(74) Representative: **Ericsson
Patent Development
Torshamnsgatan 21-23
164 80 Stockholm (SE)**

(56) References cited:
**US-A- 5 530 915          US-A1- 2003 152 032
US-A1- 2005 177 643      US-B1- 7 248 590**

- **SINGER APPLE COMPUTER INC H DESINENI
  QUALCOMM D: "Transmission Time offsets in
  RTP streams; draft-ietf-avt-rtp-toffset-06.txt",
  20070801, vol. avt, no. 6, 1 August 2007
  (2007-08-01), XP015051071, ISSN: 0000-0004**
- **D. SINGER ET AL.: 'Transmission Time offsets in
  RTP streams'
  DRAFT-IETF-AVT-RTP-TOFFSET-06.TXT APPLE
  COMPUTER INC., H. DESINENI, QUALCOMM 01
  August 2007, pages 1 - 14, XP015051071**

EP 2 241 065 B1

**Description**

TECHNICAL FIELD

The present invention relates to a method and a device for analyzing transport delay between a sender device and a receiver device in a communication system.

BACKGROUND

Delays and their variation in communication systems are important parameters when evaluating and indicating the efficiency of communication systems. Low transport delays and transport delay variations are in general desirable, in particular in real-time applications, such as Video Telephony over IP (VToIP).
The transport delay (inter-arrival jitter) and its variation may be important to analyze for a number of reasons, including:

- Optimization of jitter buffer size,
- Jitter sensitive target rate adaptation, and
- Transport jitter statistics.

In RFC3550, which describes the Real-time Transport Protocol (RTP), an inter-arrival jitter sample (as one embodiment of transport delay analysis) is defined by the following equation:

$$D_{i,j} = (R_j - R_i) - (S_j - S_i),\qquad(1)$$

where $R_j$ and $R_j$ are measured arrival time of packets $j$ and $i$, respectively, and $S_j$ and $S_i$ are sending times derived from RTP time stamps of packets $j$ and $i$, respectively.
In Video Telephony over IP (or VToIP) two media components, video and audio (or speech), are transmitted over at least two RTP data streams (one for video and one for audio) in both directions at the same time.
In order to make video transmission at the source smooth, frames are divided into smaller segments like slices or group of blocks (GOBs) in the encoder/sender device. The segments are further encapsulated in separate RTP-packets and transmitted smoothly over the frame interval rather than in bursts. Smooth transmission here means, that the sender device controls the transmission such that the $N$ RTP-packets belonging to the same video frame are transmitted with equal transmission interval $\Delta T$ given by

$$\Delta T = \frac{T_{frame}}{N},\qquad(2)$$

where $T_{frame}$ is the frame interval time between consecutive video frames.
Various standards describe smooth transmission. For example, 3GPP TS 26.114 recommends that coded pictures should be encoded into individual segments where each individual segment should be encapsulated in one RTP packet smaller than the Maximum Transfer Unit (MTU) size:

- For H.263 Profile 0, a Picture Start Code (PSC) or non-empty Group of Block (GOB) header indicates the beginning of such a segment;
- For H.263 Profile 3, MPEG-4 (Part 2) Visual, and H.264 / MPEG-4 (Part 10) AVC, a slice corresponds to such a segment.

RFC3550 states, that "Several consecutive RTP packets will have equal timestamps, if they are (logically) generated at once, e.g., belong to the same video frame." If segmented video frames are transmitted smoothly over the frame interval as described above, the actual transmission times of individual RTP-packets deviate from the nominal transmission time indicated by their timestamps $S_i$. If transport delay is estimated using an inter-arrival jitter sample given by equation (1), then it will be contaminated by the (unknown) difference or offset between the actual transmission time and the nominal transmission time of an individual RTP-packet. This offset (usually named transmission jitter) has nothing to do with transport delay or transport jitter.
The difference between actual sending time and the nominal transmission time indicated by timestamps $S_i$ of

packets lead to inaccurate or defective transport delay analysis.

IETF draft "Transmission Time offsets in RTP streams"

(http://www.ietf.org/internet-drafts/draft-ietf-avt-rtp-toffset-06.txt) proposes to use the IETF Generic RTP header extension for transmitting offsets $O_i$ for each packet from the source to the receiver and replace equation (1) with:

$$D_{i,j} = (R_j - R_i) - ((S_j + O_j) - (S_i + O_i)) \qquad (3)$$

Using the IETF Generic RTP header extension for transmitting offsets requires extra bandwidth, which is a limited resource.

US 2003/152032 discloses a prior art method of estimating transmission delays in a video information transmission system. On a sender side a video information input is encoded and packetized in units of frames or slices. Each packet is allocated a serial number so that a receiver side can know the sequence of the transmitted packets and reproduction timing of the packets. The packets further comprise time stamps allocated to respective packets. The transport delay analysis is performed using time stamps generated for the individual packets on the sender side and included in the transmission of the packets. US7248590 B1 discloses a prior art method for converting video frame segments into Internet protocol (IP) packets (RTP packets) wherein a common reference time stamp is shown at packet level.

SUMMARY

In view of the above, it is an object of the present invention to provide an improved method for determining and analyzing transport delay or transport jitter between a sender and a receiver in a communication system without the need for additional bandwidth.

Accordingly, a method for estimating transport delay in a communication system comprising sender device and a receiver device is provided. In the sender device, the method comprises the steps of assigning a send time stamp to a frame, dividing the frame into segments and transmitting each segment in a packet with the send time stamp. In the receiver device, the method comprises the steps of receiving and time stamping packets with a receipt time stamp; identifying the relative position of the packets in a frame; calculating the offset of one or more packets in the frame; and performing transport delay analysis based on the send time stamp, the receipt time stamp and the calculated offset of the one or more packets.

It is an important advantage of the present invention that the method does not require additional bandwidth, which in general is a limited resource in communication networks.

According to a further aspect of the present invention, a receiver device is provided. The receiver device is adapted to receive packets of a frame, the frame being time stamped with a send time stamp and divided into segments, each segment transmitted in a packet with the send time stamp from a sender device. The receiver device is further adapted to time stamp each received packet with a receipt time stamp. A processing device of the receiver is adapted to identify the relative position of packets in a frame, calculate the offset of one or more packets in the frame, and perform transport delay analysis based on the send time stamp, the receipt time stamp, and the calculated offset of the one or more packets.

The receiver device may be a mobile terminal or a computer, e.g. portable or stationary.

In an embodiment of the present invention, the receiver device may be a node in the communication system and/or implemented in test equipment for testing the performance of the communication system.

BRIEF DESCRIPTION OF THE DRAWINGs

The above and other features and advantages of the present invention will become readily apparent to those skilled in the art by the following detailed description of exemplary embodiments thereof with reference to the attached, in which:

Fig. 1    schematically illustrates an embodiment of the invention, and
Fig. 2    is a flow chart illustrating an embodiment of the method according to the present invention.

ABBREVIATIONS

A list of abbreviations and expressions employed herein is found below:

GoB: Group of Blocks

IETF: Internet Engineering Task Force

MPEG-4 (AVC): Coding standards

MTU: Maximum Transfer Unit

QCIF: Quarter Common Intermediate Format

RFC3550: Request For Comments 3550, a transport protocol for real-time applications

RTP: Real-time Transport Protocol

VToIP: Video Telephony over IP

3GPP: 3rd Generation Partnership Project

3GPP TS 26.114: Standard for media handling and interaction

DETAILED DESCRIPTION

The figures are schematic and simplified for clarity, and they merely show details which are essential to the understanding of the invention, while other details have been left out. Throughout, the same reference numerals are used for identical or corresponding parts.

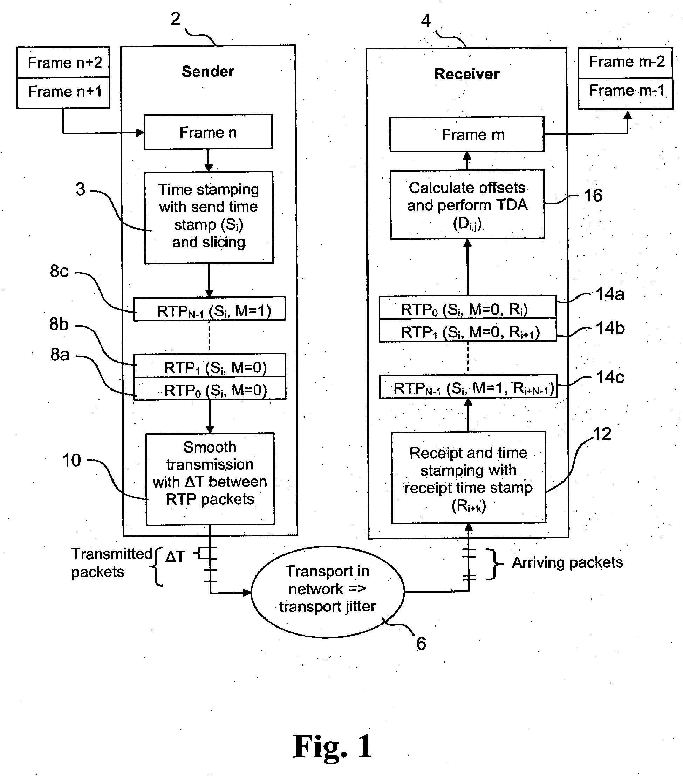

Fig. 1 schematically illustrates an embodiment of the invention. A video and/or audio source (not shown) provides frames to a sender device 2, and the sender device 2 transmits packets to a receiver device 4 via a network 6. The sender device 2 is adapted to transmit packets of video and/or audio frames to the receiver device 4 and comprises a processing unit 3 that is adapted to divide or slice frames, e.g. video frames, in segments that are encapsulated in packets 8a, 8b, 8c. Further, the processing unit 3 may be adapted to perform encoding. The packets from the processing unit are transmitted via a network interface 10, e.g. by smooth transmission. Preferably, the packets are RTP packets, i.e. packets according to the Real-time Transport Protocol (RFC3550).

The method according to the invention takes advantage of inherent properties, e.g. information in mandatory header fields, of packets that are transmitted by smooth transmission from the sender device 2. Accordingly, the method according to the invention provides improved estimate for transport delay or transport jitter when smooth transmission is applied in the sender device. However, smooth transmission is not required.

The receiver device 4 comprises a network interface 12 that is adapted to receive and time stamp each packet with receipt time stamp R. The received packets 14a, 14b, 14c are forwarded to a processing unit 16. The processing unit 16 is adapted to identify the relative position of packets of a frame, e.g. by identifying the last packet of a frame. In case the packets are RTP packets (see RFC3550), the last packet of a frame is indicated by the M-bit in the RTP header field. Furthermore, the processing unit 16 is adapted to calculate the offsets $O$ of the received packets and performing transport delay analysis (TDA) based on the send time stamp $S$, the receipt time stamp $R$, and the calculated offset $O$ of the one or more packets. Further, the processing unit 16 may be adapted to perform decoding and/or jitter buffering.

In an embodiment of the present invention, the relative position of packets of a frame may be identified by identifying the first and/or the last packet of a frame.

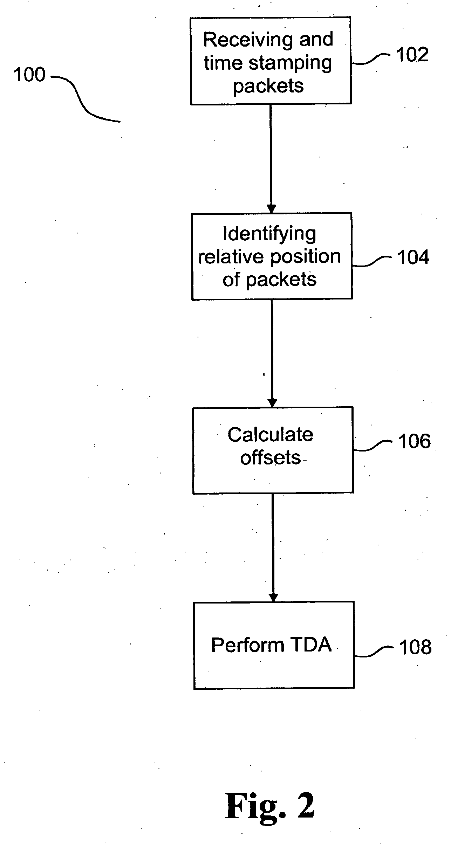

An embodiment of the method according to the invention is illustrated in Fig. 2 showing a flow chart illustrating the different steps of an embodiment of the method. The method 100 for estimating transport delay in a communication system comprising a transmitter or sender device, e.g. sender device 2, dividing a frame into segments, wherein each segment is transmitted in a packet with a send time stamp to a receiver, comprises the step 102 of receiving and time stamping packets with a receipt time stamp. Subsequently, the method proceeds to step 104 of identifying the relative position of the packets in a frame and upon determination of the packet positions, the method 100 continues to the step 106 of calculating the offset of one or more packets in the frame. The calculated offsets of one or more packets at least partly form basis for the improved estimation of the transport delay and its variations (jitter). Upon calculation of offsets, the method 100 continues to the step 108 of performing transport delay analysis based on the send time stamp $S$, the receipt time stamp R, and the calculated offset $O$ of the one or more packets.

In a preferred embodiment of the present invention, the transport delay analysis is based on the time difference $D_{i,j}$ between transmission times for two packets i and $j$, wherein $D_{i,j}$ is given by

$$D_{i,j} = (R_j - R_i) - ((S_j + O_j) - (S_i + O_i)),$$

where $R_j$ and $R_i$ are receipt time stamps of packets $j$ and $i$, respectively, $S_j$ and $S_i$ are send time stamps of packets $j$ and $i$, respectively, and $O_j$ and $O_i$ are offsets of packets $j$ and $i$, respectively.

In a preferred embodiment of the present invention, the offset $O_i$ for a packet $i$ is given by

$$O_i = k_i * \frac{T_{frame}}{N},$$

where $k_i$ indicates the relative position of the packet $i$ in the frame, $T_{frame}$ is the frame interval, and $N$ is the number of packets in the frame. This embodiment may assume that the sender device uses a smooth transmission method.

Other transmission schemes than smooth transmission, e.g. a regular transmission scheme known to the receiver device, may be applied in the sender device, and in that case the offset calculation may be amended or modified accordingly.

The transport jitter analysis may be based on the formula:

$$J(i) = J(i-1) + (|D(i-1,i)| - J(i-1))/16,$$

and may be calculated according to the directions given in RFC3550.

It is an important advantage of the present invention that offsets are not transmitted as a part of a packet, but calculated in the receiver part of the network, e.g. in a receiver device, based on inherent information in the packets. In an embodiment of the present information, the calculation of offsets is based on information present in mandatory packet header fields. Thereby, additional fields such as header field extensions requiring extra bandwidth and/or limiting data transfer capacity are not needed. Thus the present invention provides an improved precision in determining transport delay without limiting transmission capacity.

It is a further advantage of the present invention that a more precise estimation of the transport delay variations is provided without requiring additional bandwidth.

In an embodiment of the present invention where the packets are RTP packets, the index $k_i$ ($k_i$ = 0, 1, 2, ..., $N$ - 1) for each packet may be determined as or calculated by the following:

$$k_i = N - P_M + P_i,$$

where $N$ is the number of packets in the frame, $P_M$ is the sequence number (mandatory header field) for the last packet (M bit set) in the frame, and $P_i$ is the sequence number for the packet $i$. The number of packets in a frame may be any suitable number depending on application and protocol or standard, e.g. one or more, such as two, three, four, five, six, seven, eight, nine, ten, eleven, or more.

For ITU-T standard H.263 Profile 0, a typical video frame rate is ten frames/second and the number $N$ of packets in a frame is for instance nine, when a QCIF frame is divided into 9 GOBs. If offsets (4 bytes each) are to be transmitted as an extension to the header in this case as proposed in IETF draft "Transmission Time offsets in RTP streams" an extra bandwidth of 2.88 kbits/s is required, or data rate is to be limited accordingly.

It should be noted that in addition to the exemplary embodiment of the invention shown in the accompanying drawing, the invention may be embodied in different forms and should not be construed as limited to the embodiment set forth herein. Rather, this embodiment is provided so that this disclosure will be thorough and complete, and will fully convey the concept of the invention to those skilled in the art.

## Claims

1. Method for estimating transport delay in a communication system comprising a sender device (2) and a receiver device (4), the method comprising the steps of:

in the sender device (2):

- assigning a send time stamp to a frame (3),
- dividing the frame into segments (8), and
- transmitting each segment in a packet with said frame send time stamp (10);

in the receiver device (4):

- receiving and time stamping packets with a receipt time stamp,
- identifying the relative position of packets in a frame (12),
- calculating the offset of one or more packets in the frame at the receiver (16), and
- performing transport delay analysis based on said frame send time-stamp, the receipt time stamp, and the calculated offset of the one or more packets.

2. Method according to claim 1, wherein the transport delay analysis is based on the time difference $D_{i,j}$ between transmission times for two packets $i$ and $j$, wherein $D_{i,j}$ is given by

$$D_{i,j} = (R_j - R_i) - ((S_j + O_j) - (S_i + O_i)),$$

where $R_j$ and $R_i$ are receipt time stamps of packets $j$ and $i$, respectively, $S_j$ and $S_i$ are send time stamps of packets $j$ and $i$, respectively, and $O_j$ and $O_i$ are offsets of packets $j$ and $i$, respectively.

3. Method according to any of the preceding claims, wherein the offset $O_i$ for a packet $i$ is given by $O_i = k_i * \dfrac{T_{frame}}{N}$,

where $k_i$ indicates the relative position of the packet in the frame, $T_{frame}$ is the frame interval, and $N$ is the number of packets in the frame.

4. Method according to claim 3, wherein $k_j$ is given by

$$k_i = N - P_M + P_i,$$

where $N$ is the number of packets in the frame, $P_M$ is the sequence number for the last packet in the frame, and $P_i$ is the sequence number for packet $i$.

5. Method according to any of the preceding claims, wherein the packets are RTP packets.

6. Receiver device (4) for a communication system, comprising a network interface adapted to receive packets of a frame, the frame being time stamped with a send time stamp and divided into segments, each segment transmitted in a packet with said frame send time stamp (3) from a sender device (2), the receiver device (4) further being adapted to time stamp each received packet with a receipt time stamp (12), and a processing device adapted to identify the relative position of packets in a frame, calculate the offset of one or more packets in the frame (16), and perform transport delay analysis based on said frame send time stamp, the receipt time stamp, and the calculated offset of the one or more packets.

7. Receiver device according to claim 6, wherein the processing device is adapted to perform the transport delay analysis based on the time difference $D_{i,j}$ between two packets $i$ and $j$, wherein $D_{i,j}$ is given by

$$D_{i,j} = (R_j - R_i) - ((S_j + O_j) - (S_i + O_i)),$$

where $R_j$ and $R_i$ are receipt time stamps of packets $j$ and $i$, respectively, $S_j$ and $S_i$ are send time stamps of packets $j$ and $i$, respectively, and $O_j$ and $O_i$ are offsets of packets $j$ and $i$, respectively.

8. Receiver device according to any of claims 6 or 7, wherein the offset $O_i$ for a packet is given by $O_i = k_i * \dfrac{T_{frame}}{N}$, where $k_i$ indicates the relative position of the packet in the frame, $T_{frame}$ is the frame interval, and $N$ is the number of packets in the frame.

9. Receiver device according to claim 8, wherein $k_i$ is given by

$$k_i = N - P_M + P_i,$$

where $N$ is the number of packets in the frame, $P_M$ is the sequence number for the last packet in the frame, and $P_i$ is the sequence number for packet $i$.

10. Receiver device according to any of claims 6-9, wherein the packets are RTP packets.

**Patentansprüche**

1. Verfahren zum Einschätzen von Transportverzögerung in einem Kommunikationssystem umfassend eine Sendervorrichtung (2) und eine Empfängervorrichtung (4), wobei das Verfahren die folgenden Schritte umfasst:

   in der Sendervorrichtung (2):

   - Zuweisen eines Sendezeitstempels zu einem Frame (3),
   - Teilen des Frames in Segmente (8), und
   - Übertragen von jedem Segment in einem Paket mit dem Frame-Sendezeitstempel (10);

   in der Empfängervorrichtung (4):

   - Empfangen und Zeitstempeln von Paketen mit einem Empfangszeitstempel,
   - Identifizieren der relativen Position von Paketen in einem Frame (12),
   - Berechnen des Offsets von einem oder mehreren Paketen in dem Frame an dem Empfänger (16), und
   - Durchführen der Transportverzögerungsanalyse basierend auf dem Frame-Sendezeitstempel, dem Empfangszeitstempel und dem berechneten Offset von einem oder mehreren Paketen.

2. Verfahren nach Anspruch 1, wobei die Transportverzögerungsanalyse auf dem Zeitunterschied $D_{i,j}$ zwischen Übertragungszeiten für zwei Pakete i und j basiert, wobei $D_{i,j}$ vorgegeben ist durch

$$D_{i,j} = (R_j - R_i) - ((S_j + O_j) - (S_i + O_i)),$$

wobei $R_j$ und $R_i$ Empfangszeitstempel von Paketen $j$ bzw. $i$ sind, $S_j$ und $S_i$ Sendezeitstempel von Paketen $j$ bzw. $i$ sind und $O_j$ und $O_i$ Offsets von Paketen $j$ bzw. $i$ sind.

3. Verfahren nach einem der vorstehenden Ansprüche, wobei das Offset $O_i$ für ein Paket $i$ vorgegeben wird durch

$$O_i = k_i * \frac{T_{frame}}{N},$$

wobei $k_i$ die relative Position des Pakets im Frame anzeigt, $T_{frame}$ das Frame-Intervall ist und $N$ die Anzahl von Paketen im Frame ist.

4. Verfahren nach Anspruch 3, wobei $k_i$ vorgegeben wird durch

$$k_i = N - P_M + P_i,$$

wobei *N* die Anzahl der Pakete im Frame ist, $P_M$ die Sequenznummer für das letzte Paket im Frame ist und $P_i$ die Sequenznummer für Paket *i* ist.

5. Verfahren nach einem der vorstehenden Ansprüche, wobei die Pakete RTP-Pakete sind.

6. Empfängervorrichtung (4) für ein Kommunikationssystem, umfassend eine Netzwerkschnittstelle, die zum Empfangen von Paketen eines Frames angepasst ist, wobei der Frame mit einem Sendezeitstempel zeitgestempelt ist und in Segmente geteilt ist, wobei jedes Segment in einem Paket mit dem Frame-Sendezeitstempel (3) von einer Sendervorrichtung (2) übertragen wird, wobei die Empfängervorrichtung (4) weiterhin dazu angepasst ist, jedes empfangene Paket mit einem Empfangszeitstempel (12) zeitzustempeln, und eine Verarbeitungsvorrichtung, die dazu angepasst ist, die relative Position von Paketen in einem Frame zu identifizieren, das Offset von einem oder mehreren Paketen in dem Frame (16) zu berechnen und Transportverzögerungsanalyse basierend auf dem Frame-Sendezeitstempel, dem Empfangszeitstempel und dem berechneten Offset des einen oder der mehreren Pakete durchzuführen.

7. Empfängervorrichtung nach Anspruch 6, wobei die Verarbeitungsvorrichtung dazu angepasst ist, die Transportverzögerungsanalyse basierend auf dem Zeitunterschied $D_{i,j}$ zwischen zwei Paketen *i* und *j* durchzuführen, wobei $D_{i,j}$ vorgegeben ist durch

$$D_{i,j} = (R_j - R_i) - ((S_j + O_j) - (S_i + O_i)),$$

wobei $R_j$ und $R_i$ Empfangszeitstempel von Paketen *j* bzw. *i* sind, $S_j$ und $S_i$ Sendezeitstempel von Paketen *j* bzw. *i* sind und $O_j$ und $O_i$ Offsets von Paketen *j* bzw. *i* sind.

8. Empfängervorrichtung nach einem der Ansprüche 6 oder 7, wobei das Offset $O_i$ für ein Paket vorgegeben wird durch

$$O_i = k_i * \frac{T_{frame}}{N},$$

wobei $k_i$ die relative Position des Pakets im Frame anzeigt, $T_{frame}$ das Frame-Intervall ist und *N* die Anzahl von Paketen im Frame ist.

9. Empfängervorrichtung nach Ansprüche 8, wobei $k_i$ vorgegeben wird durch

$$k_i = N - P_M + P_i,$$

wobei *N* die Anzahl der Pakete im Frame ist, $P_M$ die Sequenznummer für das letzte Paket im Frame ist und $P_i$ die Sequenznummer für Paket *i.* ist.

10. Empfängervorrichtung nach einem der Ansprüche 6-9, wobei die Pakete RTP-Pakete sind.

**Revendications**

1. Méthode d'estimation d'un temps de propagation dans un système de communication, comprenant un dispositif expéditeur (2) et un dispositif récepteur (4), la méthode comprenant les étapes suivantes :

dans le dispositif expéditeur (2) :

- affectation d'une estampille temporelle d'expédition à une trame (3),
- division de la trame en segments (8), et

- transmission de chaque segment dans un paquet avec ladite estampille temporelle d'expédition (10) de la trame ;

dans le dispositif récepteur (4) :

- réception et horodatage de paquets avec une estampille de réception,
- identification de la position relative de paquets dans une trame (12),
- calcul du décalage d'un ou plusieurs paquets dans la trame au récepteur (16), et
- exécution d'une analyse du temps de propagation basée sur ladite estampille temporelle d'expédition de la trame, l'estampille temporelle de réception, et le décalage calculé du ou de paquets.

2. Méthode selon la revendication 1, l'analyse du temps de propagation étant basée sur la différence de temps $D_{i,j}$ entre les temps de transmission pour deux paquets $i$ et $j$, $D_{i,j}$ s'obtenant avec l'expression

$$D_{i,j} = (R_j\text{-}R_i)\text{-}((S_j + O_j)\text{-}(S_i + O_i)),$$

dans laquelle $R_j$ et $R_i$ sont des estampilles temporelles de réception de paquets $j$ et $i$ respectivement, $S_j$ et $S_i$ sont des estampilles temporelles d'expédition de paquets $j$ et $i$ respectivement, et $O_j$ et $O_i$ sont des décalages de paquets $j$ et $i$ respectivement.

3. Méthode selon une quelconque des revendications précédentes, le décalage $O_i$ pour un paquet $i$ s'obtenant avec l'expression

$$O_i = k_i * \frac{T_{frame}}{N},$$

dans laquelle $k_i$ indique la position relative du paquet dans la trame, $T_{frame}$ est l'intervalle de trame, et $N$ est le nombre de paquets dans la trame.

4. Méthode selon la revendication 3, $k_i$ s'obtenant avec l'expression

$$k_i = N - P_M + P_i,$$

dans laquelle $N$ est le nombre de paquets dans la trame, $P_M$ est le numéro de séquence pour le dernier paquet de la trame, et $P_i$ est le numéro de séquence pour le paquet $i$.

5. Méthode selon une quelconque des revendications précédentes, les paquets étant des paquets RTP.

6. Dispositif récepteur (4) pour un système de communication, comprenant une interface de réseau adaptée pour recevoir des paquets d'une trame, la trame étant horodatée avec une estampille temporelle d'expédition et divisée en segments, chaque segment étant transmis dans un paquet avec ladite estampille temporelle d'expédition de trame (3) d'un dispositif expéditeur (2), le dispositif récepteur (4) étant également adapté pour horodater chaque paquet reçu avec une estampille temporelle de réception (12), et un dispositif de traitement adapté pour identifier la position relative des paquets dans une trame, calculer le décalage d'un ou plusieurs paquets dans la trame (16), et effectuer une analyse du temps de propagation basée sur ladite estampille temporelle d'expédition de trame, l'estampille temporelle de réception, et le décalage calculé du ou des plusieurs paquets.

7. Dispositif récepteur selon la revendication 6, le dispositif de traitement étant adapté pour effectuer l'analyse du temps de propagation basée sur une différence de temps $D_{i,j}$ entre deux paquets $i$ et $j$, $D_{i,j}$ s'obtenant avec l'expression

$$D_{i,j} = (R_j - R_i)\text{-}((S_j + O_j) - (S_i + O_i)),$$

dans laquelle $R_j$ et $R_i$ sont les estampilles temporelles de réception de paquets $j$ et $i$, respectivement, $S_j$ et $S_i$ étant

estampilles temporelles d'expédition de paquets *j* et *i,* respectivement, et $O_j$ et $O_i$ étant des décalages de paquets *j* et *i,* respectivement.

**8.** Dispositif récepteur selon une quelconque des revendications 6 ou 7, le décalage $O_i$ pour un paquet s'obtenant avec l'expression

$$O_i = k_i * \frac{T_{frame}}{N},$$

dans laquelle $k_i$ indique la position relative du paquet de la trame, $T_{frame}$ est l'intervalle de la trame, et *N* est le nombre de paquets dans la trame.

**9.** Dispositif récepteur selon la revendication 8, $k_i$ s'obtenant avec l'expression

$$k_i = N - P_M + P_i,$$

dans laquelle *N* désigne le nombre de paquets dans la trame, $P_M$ le numéro de séquence pour le dernier paquet de la trame, et $P_i$ le numéro de séquence pour le paquet *i.*

**10.** Dispositif récepteur selon une quelconque des revendications 6 à 9, les paquets étant des paquets RTP.

**Fig. 1**

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003152032 A

- US 7248590 B1